# FASCICULE DE BREVET EUROPEEN

(11) **EP 0 628 459 B1**
(45) Date de publication et mention de la délivrance du brevet: **13.01.1999**
(21) Numéro de dépôt: 94401092.5
(22) Date de dépôt: 17.05.1994
(51) Int. Cl.: B60T 13/14, B60G 17/04

(54) **Circuit hydraulique équipé d'une réserve de pression de sécurité pour frein arrière de véhicule automobile et véhicule ainsi équipé**
Hydraulikkreis mit Sicherheits-Druckreserve für Kraftfahrzeug-Hinterradbremse sowie damit ausgerüstetes Kraftfahrzeug
Hydraulic circuit with an emergency pressure source for motor vehicle rear brake and vehicle equiped therewith

(30) Priorité: 07.06.1993 FR 9306783
(43) Date de publication de la demande: 14.12.1994
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy Le Roi (FR)
(74) Mandataire: Durand, Yves Armand Louis

(56) Documents cités:
- EP-A- 0 363 827
- FR-A- 2 328 597
- FR-A- 2 391 098

## Description

La présente invention concerne un circuit hydraulique équipé d'une réserve de pression de sécurité pour frein arrière de véhicule automobile, ainsi qu'un véhicule automobile équipé de ce circuit.

On connaît déjà par le document FR-A-2 328 597 au nom de l'une des demanderesses, une installation de freinage pour véhicule à suspension oléopneumatique utilisant comme source de pression des accumulateurs de la suspension.

La réglementation de sécurité automobile impose que les véhicules automobiles équipés de suspensions hydropneumatiques et de systèmes de freinage à haute pression soient munis d'une réserve de pression de sécurité intégrée au circuit de suspension et mise en service en cas de défaillance du circuit hydraulique, de façon à arrêter le véhicule soit au moyen des systèmes de freinage avant ou arrière pour les circuits en I, soit en diagonale pour les circuits en X.

Lorsque le circuit hydraulique ne comporte pas de dispositifs d'anti-affaissement reliés aux cylindres de suspension, une vanne de sécurité isole les circuits avant et arrière, en cas de défaillance, à partir d'un seuil de pression préétabli, de façon à mettre en service les freins avant par l'intermédiaire de l'accumulateur principal, si la défaillance se produit à l'arrière du véhicule, ou bien mettre en service les freins arrière par l'intermédiaire des sphères de suspension si la défaillance se produit à l'avant.

Or, l'utilisation des sphères de suspension en tant que réserve de freins peut engendrer un affaissement brutal de la suspension arrière à chaque remise en route du véhicule, par transfert du liquide des sphères de suspension arrière sur la réserve de frein.

Dans le cas au contraire où le circuit hydraulique comporte deux clapets anti-affaissement commandés par le circuit de haute pression et interposés respectivement entre la vanne de sécurité et les cylindres avant pour l'un, et la vanne de sécurité et les cylindres arrière pour le second, la vanne de sécurité isole la panne mais les clapets se ferment également. Si la défaillance se produit à l'arrière, l'accumulateur principal permet d'assurer le freinage à l'avant. Si la défaillance se produit à l'avant, la fermeture des clapets anti-affaissement intervenant sensiblement en même temps que la fermeture de la vanne de sécurité, empêche la communication avec les sphères, d'où il résulte que le freinage arrière ne peut plus être assuré. Il est alors nécessaire de prévoir dans le circuit de freinage arrière une réserve de pression de sécurité auxiliaire.

La présente invention résout ces problèmes et propose un circuit hydraulique muni d'une réserve de pression de sécurité pour frein arrière de véhicule automobile, de conception simple, indépendant des pressions dynamiques de la suspension arrière.

A cet effet, la présente invention a pour objet un circuit hydraulique conforme à la revendication 1 annexée.

Suivant une réalisation particulière, la deuxième chambre comporte une partie de forme annulaire entourant ledit corps.

Suivant une caractéristique particulière, les moyens élastiques sont des moyens mécaniques.

Avantageusement, ces moyens élastiques comprennent un ressort ou analogue agissant sur le piston.

La réserve de pression comporte une pièce en forme de cloche comprenant, à sa base, une collerette sur laquelle le ressort précité est en appui et fixée par sa partie supérieure à une tige agissant sur le piston précité.

Suivant une autre caractéristique, la deuxième chambre précitée communique avec une enceinte protégée.

Suivant une variante de réalisation, les moyens élastiques sont des moyens pneumatiques.

Les moyens pneumatiques précités comprennent une masse de gaz sous pression enfermée dans la deuxième chambre.

Suivant une autre caractéristique, des moyens de lubrification du piston sont prévus dans la réserve.

Suivant une autre caractéristique, ces moyens de lubrification comportent une réserve d'huile limitée par deux chanfreins prévus respectivement sur le corps et le piston.

Les moyens élastiques sont prédéterminés de façon que la pression résiduelle dans le circuit de freinage soit supérieure ou égale à une valeur donnée lorsque le piston est en butée de détente.

Suivant une autre caractéristique, les moyens élastiques sont prédéterminés de façon que le piston soit en butée d'attaque pour une pression dans le circuit inférieure à la pression de suspension lors de la marche du véhicule.

L'invention a également pour objet un véhicule automobile équipé du circuit hydraulique comportant l'une ou plusieurs des caractéristiques précédemment mentionnées prises seules ou en combinaison.

Mais d'autres avantages et caractéristiques de l'invention apparaîtront mieux dans la description détaillée qui suit et se réfère aux dessins annexés, donnés uniquement à titre d'exemple, et dans lesquels :
La figure 1 est une illustration schématique du circuit de suspension hydropneumatique d'un véhicule automobile.
La figure 2 illustre une première réalisation d'un accumulateur de pression selon l'invention.
La figure 3 illustre une seconde réalisation d'un accumulateur de pression selon l'invention.

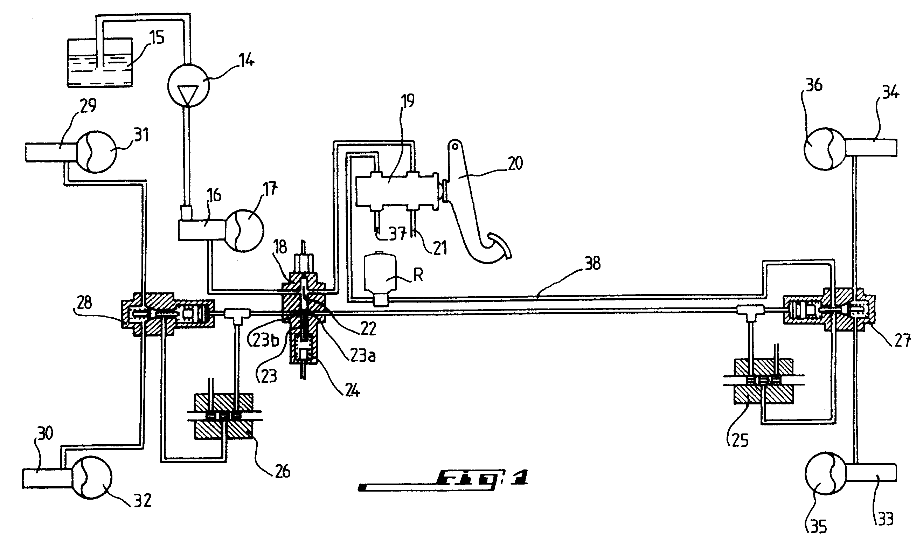

Sur la figure 1, on voit un circuit de suspension hydropneumatique et de freinage comprenant une pompe à haute pression 14 reliée en amont à un réservoir 15 contenant le liquide hydraulique et en aval à un conjoncteur-disjoncteur 16 sur lequel est monté un accumulateur dit principal 17. Le conjoncteur-disjoncteur 16 est destiné à maintenir une pression constante dans l'accumulateur principal 17, lequel assure l'alimentation des différents éléments à fonctionnement hydraulique du véhicule, à savoir le système de suspension, le système de freinage, le système de direction etc... L'accumulateur principal 17 est relié en aval à une vanne de sécurité 18, elle-même reliée à un doseur de frein 19 commandé par la pédale de frein 20 et qui détermine, en fonction de l'effort exercé sur la pédale 20, la pression dans le circuit des freins avant 21. La vanne de sécurité 18 comporte un alésage 22 dans lequel coulisse un tiroir 23 sur lequel s'exerce une pression en provenance de l'accumulateur principal 17, et d'autre part celle d'un ressort antagoniste 24. Ce tiroir 23 est mobile devant les deux orifices 23a et 23b des canalisations conduisant respectivement aux deux correcteurs de hauteur 25 et 26 et d'autre part aux deux clapets anti-affaissement 27, 28. Le clapet anti-affaissement avant 28 est relié aux éléments porteurs 29, 30 (ou cylindres de suspension) sur lesquels sont montées les sphères 31 et 32. Le clapet anti-affaissement arrière 27 est relié d'une part, aux cylindres de suspension 33, 34 comportant respectivement les sphères de suspension 35 et 36, et d'autre part, au doseur 19 qui détermine la pression dans le circuit des freins arrière 37 par l'intermédiaire d'une canalisation 38 et d'une réserve de sécurité conforme à l'invention R.

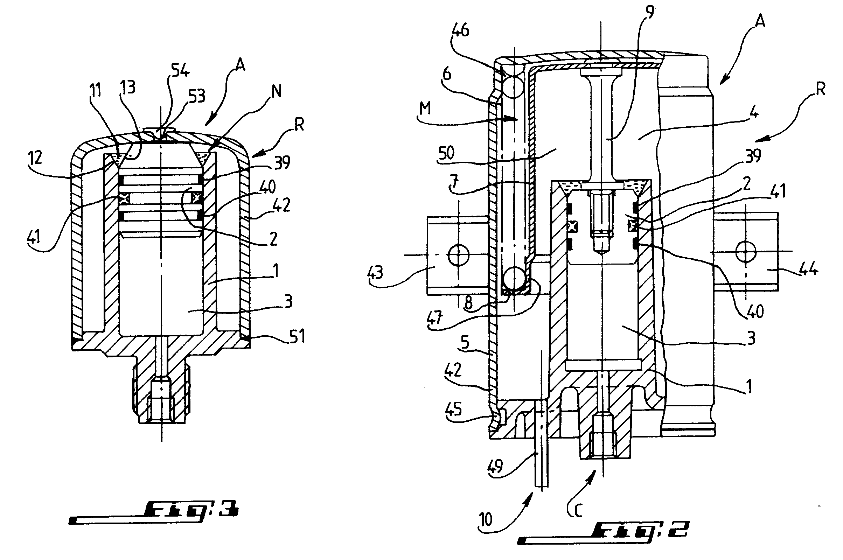

Suivant une réalisation particulière de l'invention, et en référence à la figure 2, cette réserve R comprend un corps 1 dans lequel coulisse un piston 2 entouré de deux segments de guidage en PTFE 39, 40 et d'un joint en élastomère 41. Une enveloppe 42 comportant deux pattes de fixation 43, 44 est sertie sur le corps 1, lequel présente à cet endroit une gorge 45 permettant l'ancrage des deux pièces.

Un ressort 6 est en appui par l'une de ses extrémités sur le fond de l'enveloppe 42 en étant centré dans celle-ci en 46, et par son extrémité opposée sur un élément en forme de cloche 7 en étant centré sur celle-ci en 47. La cloche 7 est reliée au piston 2 par l'intermédiaire d'une vis épaulée 9 bloquée sur le piston 2 et sertie à l'autre extrémité sur la cloche 7. Le corps 1 comporte un embout 49 collé qui permettra par l'intermédiaire d'un tube plastique (non représenté) emmanché sur lui et débouchant à l'autre extrémité dans un corps creux ne comportant ni eau ni poussière, les variations de volume de l'enceinte 50 générées par le débattement du piston 2.

Selon une autre réalisation particulière de l'invention, illustrée plus particulièrement sur la figure 3, cette réserve comprend un corps 1 dans lequel coulisse un piston 2 entouré de deux segments de guidage 39,40, et d'un joint en élastomère 41. Une enveloppe 42 est soudée sur le corps 1 soit par laser ou tout autre type de soudure en 51. Le gonflage de cette réserve R est réalisé par de l'azote sous pression que l'on injecte par l'ouverture 53 qui est ensuite obturée de façon étanche par l'intermédiaire d'une bille en acier doux 54 soudée électriquement sur l'ouverture 53 et qui prend une forme de galette.

On notera également qu'un coin d'huile 11 est prévu, réalisé par l'intermédiaire d'un chanfrein 12 sur le corps 1 et d'un autre chanfrein 13 sur le piston 2, afin d'assurer le graissage du piston 2 dans le corps 1.

On notera également que cette réserve R est moins encombrante et plus légère que la réserve à ressort métallique précédemment décrite.

Le fonctionnement de la réserve de l'invention va être décrit brièvement dans ce qui suit en référence aux dessins.

Les freins avant 21 sont alimentés en permanence en pression par l'accumulateur principal 17, et les freins arrière 37 par les accumulateurs de suspension arrière 35 et 36. La vanne de sécurité 18 sépare l'accumulateur principal 17 des accumulateurs de suspension 35 et 36 pour un seuil de pression prédéterminé par le ressort 24, de telle sorte que lorsqu'un incident occasionnant une fuite importante se produit, soit à l'avant, soit à l'arrière, le freinage soit toujours assuré du côté opposé au côté de l'incident. Dans le cas où un clapet anti-affaissement est monté sur chaque essieu d'un véhicule, tel qu'illustré en 27, 28, et qu'une fuite importante se produit à l'avant du véhicule, la vanne 18 se ferme, en même temps que les deux clapets anti-affaissement 27, 28, puisqu'ils sont pilotés par la pression de l'accumulateur principal 17. Lorsque la pression du circuit atteint une valeur de pression présélectionnée, la réserve de pression R est mise en service de façon à assurer une certaine pression dans les freins arrière.

Dans les deux réalisations précitées de la réserve de l'invention, la pression du ressort et la quantité d'azote seront réglées de façon que lorsque le piston se trouve en butée de détente, c'est-à-dire en fin de course après fonctionnement de sécurité, la pression dans le circuit par exemple soit de 38 bars au minimum, et que lorsqu'il se trouve en position d'attaque, position illustrée sur les figures, il soit à une pression inférieure ou égale à la pression de suspension arrière lors de la marche du véhicule, afin d'éviter tout fonctionnement du piston en utilisation normale du véhicule.

Les principaux avantages de l'invention tiennent en ce que la réserve de frein est indépendante des pressions dynamiques de la suspension arrière, et ne participe donc pas à la suspension comme ceci est le cas pour les sphères de suspension.

Grâce à l'invention, on évite avantageusement à la suspension arrière de s'affaisser brutalement à chaque remise en route du véhicule par transfert du liquide des sphères de suspension arrière sur la réserve de frein, le piston étant repoussé avant que la pression de suspension de marche ne soit atteinte.

Bien entendu, l'invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées dans les limites fixées par les revendications.

## Revendications

1. Circuit hydraulique de suspension hydropneumatique et de freinage dans lequel le liquide de suspension commande les freins, comportant un accumulateur principal (17) relié en aval à une vanne de sécurité (18) qui est elle-même reliée par un doseur de frein (19) à des circuits de freinage avant (21) et arrière (37) ou en diagonale, ladite vanne de sécurité (18) servant à isoler, en cas de défaillance, les circuits de freinage l'un de l'autre, l'un (37) des circuits de freinage comportant en aval de la vanne de sécurité et en amont du doseur de frein une canalisation (38) reliant des sphères de suspension (35, 36) au doseur de frein, caractérisé en ce que ladite canalisation (38) est munie d'une réserve de pression de sécurité (R) comprenant un corps (1), dans lequel un piston (2) est monté mobile en translation en divisant ledit corps (1) en une première chambre (3) communiquant avec ladite canalisation (38) et une deuxième chambre (4) dans laquelle sont prévus des moyens élastiques (M) sollicitant le piston (2) vers la première chambre (3) avec une pression prédéterminée, ladite pression prédéterminée étant réglée de façon que la pression résiduelle dans le circuit de freinage associé (37) soit supérieure ou égale à une valeur donnée assurant toujours un certain freinage lorsque le piston (2) est en butée de détente.

2. Circuit selon la revendication 1, caractérisé en ce que les moyens élastiques sont prédéterminés de façon que le piston (2) soit en butée d'attaque pour une pression dans le circuit inférieure à la pression de suspension lors de la marche du véhicule.

3. Circuit selon la revendication 1 ou 2, caractérisé en ce que les moyens élastiques (M) sont des moyens mécaniques.

4. Circuit selon la revendication 3, caractérisé en ce que les moyens élastiques comprennent un ressort (6) ou analogue agissant sur le piston (2).

5. Circuit selon la revendication 4, caractérisé en ce qu'il comporte dans la deuxième chambre (4) une pièce en forme de cloche (7) comprenant, à sa base, une collerette (8) sur laquelle le ressort précité (6) est en appui et fixée par sa partie supérieure à une tige (9) agissant sur le piston précité (2).

6. Circuit selon l'une quelconque des revendications 3 à 5, caractérisé en ce que la deuxième chambre précitée (4) communique avec une enceinte protégée (10) qui permet les variations de volume de la deuxième chambre générées par le débattement du piston (2).

7. Circuit selon la revendication 1 ou 2, caractérisé en ce que les moyens élastiques (M) sont des moyens pneumatiques.

8. Circuit selon la revendication 7, caractérisé en ce que les moyens pneumatiques précités comprennent une masse de gaz sous pression enfermée dans la deuxième chambre (4).

9. Circuit selon l'une quelconque des revendications précédentes, caractérisé en ce qu'elle comprend des moyens de lubrification (N) du piston (2).

10. Circuit selon la revendication 9, caractérisé en ce que les moyens de lubrification précités comportent une réserve d'huile (11) limitée par deux chanfreins (12) et (13) prévus respectivement sur le corps (1) et le piston (2).

11. Circuit selon l'une des revendications précédentes, caractérisé en ce que la deuxième chambre précitée (4) comporte une partie de forme annulaire (5) entourant ledit corps de forme sensiblement cylindrique (1).

12. Circuit selon l'une des revendications précédentes, caractérisé en ce que la canalisation (38) est reliée, en amont de la réserve de pression de sécurité (R), à un clapet anti-affaissement (27) interposé entre la vanne de sécurité (18) et les sphères de suspension précitées (35, 36).

13. Véhicule automobile équipé du circuit selon l'une des revendications précédentes.

## Claims

1. Hydraulic hydropneumatic suspension and braking circuit in which the suspension liquid controls the brakes, comprising a main accumulator (17) connected downstream of a safety valve (18), which itself is connected by a brake metering distributor (19) to a front braking circuit (21) and a rear braking circuit (37) or a diagonally braking circuit, the said safety valve (18) serving to isolate, in case of failure, the braking circuits from each other, one (37) of the braking circuits comprising downstream of the safety valve and upstream of the brake metering distributor a duct (38) connecting the suspension spheres (35, 36) to the brake metering distributor, characterized in that the said duct (38) is provided with a safety pressure supply storage (R) comprising a body (1) in which a piston (2) is mounted for movement in translation by dividing the said body (1) into a first chamber (3) communicating with the said duct (38) and a second chamber (4) in which are provided elastic means (M) urging the piston (2) towards the first chamber (3) with a predetermined pressure, the said predetermined pressure being adjusted so that the residual pressure in the associated braking circuit (37) be above or equal to a given value always ensuring some braking when the piston (2) is in expansion abutment.

2. Circuit according to claim 1, characterized in that the elastic means are predetermined so that the piston (2) be in a drive abutment for a pressure in the circuit lower than the suspension pressure during the run of the vehicle.

3. Circuit according to claim 1 or 2, characterized in that the elastic means (M) are mechanical means.

4. Circuit according to claim 3, characterized in that the elastic means comprise a spring (6) or the like acting upon the piston (2).

5. Circuit according to claim 4, characterized in that it comprises in the second chamber (4) a bell-shaped member (7) comprising at its base a collar (8) upon which the aforesaid spring (6) is bearing and fastened with its upper portion to a rod (9) acting upon the aforesaid piston (2).

6. Circuit according to any one of claims 3 to 5, characterized in that the aforesaid second chamber (4) communicates with a protected enclosed space (10) which permits the volume variations of the second chamber generated by the movement of the piston (2).

7. Circuit according to claim 1 or 2, characterized in that the elastic means (M) are pneumatic means.

8. Circuit according to claim 7, characterized in that the aforesaid pneumatic means comprise a mass of gas under pressure enclosed within the second chamber (4).

9. Circuit according to any one of the foregoing claims, characterized in that it comprises means (N) for the lubrication of the piston (2).

10. Circuit according to claim 9, characterized in that the aforesaid lubricating means comprise an oil supply (11) limited by two chamfers (12) and (13) provided on the body (1) and the piston (2), respectively.

11. Circuit according to one of the foregoing claims, characterized in that the aforesaid second chamber (4) comprises a portion of annular shape (5) surrounding the said body of substantially cylindrical shape (1).

12. Circuit according to one of the foregoing claims, characterized in that the duct (38) is connected upstream of the safety pressure supply storage (R) to an anti-sagging valve (27) interposed between the safety valve (18) and the aforesaid suspension spheres (35, 36).

13. Automotive vehicle fitted with a circuit according to one of the foregoing claims.

## Patentansprüche

1. Hydraulischer Kreis für hydropneumatische Aufhängung und Bremsung, in welchem die Aufhängungsflüßigkeit die Bremsen betätigt, mit einem stromabwärts mit einem Sicherheitsventil (18) verbundenen Hauptspeicher (17), welches selber durch ein Bremsenmeßgerät (19) mit Kreisen zur Vorderbremsung (21) und Hinterbremsung (37) oder Diagonalbremsung verbunden ist, wobei das besagte Sicherheitsventil (18) dazu dient, im Falle eines Ausfalls die Bremsungskreise voneinander zu trennen, wobei der eine (37) der Bremsungskreise eine die Aufhängungskugeln (35, 36) mit dem Zumaßbremsengerät verbindende Leitung (38) stromabwärts des Sicherheitsventils und stromaufwärts des Zumaßbremsengerätes aufweist, dadurch gekennzeichnet, daß die besagte Leitung (38) mit einem einen Körper (1) aufweisenden Sicherheitsdruckvorratsspeicher (R) versehen ist, in welchem Körper ein Kolben (2) translationsbewegbar angeordnet ist und den besagten Körper (1) in eine erste mit der besagten Leitung (38) in Verbindung stehende Kammer (3) und eine zweite Kammer (4), in welcher den Kolben (2) zur ersten Kammer (3) hin mit einem vorbestimmten Druck beaufschlagende elastische Mittel (M) vorgesehen sind, unterteilt, wobei der besagte vorbestimmte Druck derart eingestellt wird, daß der Restdruck in dem zugeordneten Bremsungskreis (37) höher als ein gegebener Wert oder diesem gleich ist, welcher Wert stets eine gewiße Bremsung gewährleistet, wenn der Kolben (2) im Entspannungsanschlag ist.

2. Kreis nach Anspruch 1, dadurch gekennzeichnet, daß die elastischen Mittel derart vorbestimmt sind, daß der Kolben (2) im Angriffsanschlag bei einem niedrigeren Druck in dem Kreis als der Aufhängungsdruck, während der Fahrt des Fahrzeuges, ist.

3. Kreis gemäß Anspruch 1 oder 2, dadurch gekennzeichnet, daß die elastischen Mittel (M) mechanische Mittel sind.

4. Kreis nach Anspruch 3, dadurch gekennzeichnet, daß die elastischen Mittel eine auf den Kolben (2) einwirkende Feder (6) oder dergleichen umfassen.

5. Kreis gemäß Anspruch 4, dadurch gekennzeichnet, daß er in der zweiten Kammer (4) ein glockenförmiges Glied (7) aufweist, das an seinem unteren Teil einen Kragen (8), an welchem die vorgenannte Feder (6) sich abstützt, aufweist und welches mit seinem oberen Teil an einer auf den vorgenannten Kolben (2) einwirkende Stange (9) befestigt ist.

6. Kreis gemäß irgendeinem der Ansprüche 3 bis 5, dadurch gekennzeichnet, daß die vorgenannte zweite Kammer (4) mit einer geschützten Hülle (10), die die durch die Bewegung des Kolbens (2) erzeugten Volumenänderungen der zweiten Kammer gestattet, in Verbindung steht.

7. Kreis nach Anspruch 1 oder 2, dadurch gekennzeichnet, daß die elastischen Mittel (M) pneumatische Mittel sind.

8. Kreis gemäß Anspruch 7, dadurch gekennzeichnet, daß die vorgenannten pneumatischen Mittel eine in der zweiten Kammer (4) eingeschloßene Druckgasmasse umfassen.

9. Kreis nach irgendeinem der vorangehenen Ansprüche, dadurch gekennzeichnet, daß er Mittel (N) zur Schmierung des Kolbens (2) aufweist.

10. Kreis gemäß Anspruch 9, dadurch gekennzeichnet, daß die vorgenannten Schmierungsmittel einen durch zwei jeweils an dem Körper (1) und dem Kolben (2) vorgesehenen Abfasungen (12) und (13) begrenzten Ölvorrat (11) aufweisen.

11. Kreis gemäss einem der vorangehenden Ansprüche, dadurch gekennzeichnet, daß die vorgenannte zweite Kammer (4) einen den besagten Körper etwa zylindrischer Gestalt (1) umgebenden ringförmigen Teil (5) aufweist.

12. Kreis nach einem der vorangehenden Ansprüche, dadurch gekennzeichnet, daß die Leitung (38) stromaufwärts des Sicherheitsdruckvorratspeichers (R) mit einem zwischen dem Sicherheitsventil (18) und den vorgenannten Aufhängungskugeln (35, 36) zwischengefügtes Antisenkungsventil (27) verbunden ist.

13. Mit dem Kreis nach einem der vorangehenden Ansprüche ausgerüstetes Kraftfahrzeug.
